Europäisches Patentamt

European Patent Office

Office européen des brevets

(19)

(11) Veröffentlichungsnummer : **0 670 575 B1**

(12)

# EUROPÄISCHE PATENTSCHRIFT

(45) Veröffentlichungstag der Patentschrift :
27.09.95 Patentblatt 95/39

(51) Int. Cl.⁶ : **G21C 19/317**, C01B 5/00,
B01D 53/46, B01D 53/86

(21) Anmeldenummer : 93120086.9

(22) Anmeldetag : 13.12.93

(54) **Vorrichtung zur Entfernung von freiem Wasserstoff aus einem Wasserstoff und Sauerstoff enthaltenden Gasgemisch.**

(43) Veröffentlichungstag der Anmeldung :
06.09.95 Patentblatt 95/36

(45) Bekanntmachung des Hinweises auf die
Patenterteilung :
27.09.95 Patentblatt 95/39

(84) Benannte Vertragsstaaten :
BE CH DE ES FR LI NL SE

(56) Entgegenhaltungen :
EP-A- 0 358 912
EP-A- 0 436 942
DE-A- 4 236 271
DATABASE WPI Derwent Publications Ltd.,
London, GB; AN 88-129683 & JP-A-63 072 851

(73) Patentinhaber : GESELLSCHAFT FÜR
ANLAGEN- UND REAKTORSICHERHEIT (
GRS) mbH
Schwertnergasse 1
D-50667 Köln (DE)

(72) Erfinder : Chakraborty, Amiya Kumar, Dr.
Tannenweg 9A
D-50374 Erftstadt (DE)

(74) Vertreter : Hoffmann, Eckart, Dipl.-Ing.
Patentanwalt
Bahnhofstrasse 103
D-82166 Gräfelfing (DE)

## Beschreibung

Die Erfindung betrifft eine Vorrichtung zur Entfernung von freiem Wasserstoff aus einem im wesentlichen Wasserstoff, Sauerstoff und Dampf enthaltenden Gasgemisch nach dem Oberbegriff des Patenanspruchs 1.

Verschiedenartige chemische Prozesse führen während der Entwicklung eines schweren Störfalles in einem Kernkraftwerk zur Entstehung von Wasserstoff. Hierdurch können sich brennbare Gasgemische im Sicherheitsbehälter bilden. Eine längerfristige Freisetzung und Anreicherung von Wasserstoff kann zu detonationsfähigen Gemischen führen. Dies bedeutet eine erhöhte Gefährdung der Integrität des Sicherheitsbehälters, der letzten Barriere für die Rückhaltung von Spaltprodukten. (Der Begriff "Sicherheitsbehälter" steht hier als Oberbegriff für alle Räumlichkeiten, in denen das geschilderte Problem auftreten kann und gelöst werden muß.) Derartige Gasgemische können auch bei Schwerwasser-moderierten Reaktoren auftreten. Ebenso werden bei der Zwischenlagerung und Endlagerung abgebrannter Brennstäbe Wasserstoff und seine Isotope in eine sauerstoffhaltige Atmosphäre freigesetzt und stellen ein gewisses Gefährdungspotential dar.

Zur Vermeidung der von einem solchen zündfähigen Gasgemisch ausgehenden Gefahr sind Maßnahmen bekannt, die auf eine Beseitigung des Wasserstoffs in dem Gasgemisch abzielen. Diese Maßnahmen umfassen den Einsatz von Zündern sowie die katalytische Rekombination des Wasserstoffs mit dem im Gasgemisch gleichzeitig vorhandenen Sauerstoff zu Wasser (z.B. EP-A-0 303 144). Insbesondere der Einsatz katalytischer Rekombinatoren (Katalysatoren), die inzwischen in verschiedenen Ausführungen bekannt geworden sind (EP-A-0 416 143, DE-A-36 04 416, EP-A-0 303 144, DE-A-40 03 833), erscheint vielversprechend. Aus der DE-A-37 25 290 ist die Eignung ternärer Palladiumlegierungen wie PdNiCu als Katalysator für die vorgenannten Zwecke bekannt. Solche Katalysatoren können in Form von mit der Katalysatorlegierung beschichteten Trägerkörpern, oder als Schwamm oder Granulat eingesetzt werden.

Die Menge des pro Zeiteinheit durch die katalytische Wirkung oxidierten Wasserstoffs nimmt exponentiell mit der Temperatur des Katalysators zu. Die Katalysatoren heizen sich aufgrund der exothermen Reaktion bis zum Erreichen eines Gleichgewichts zwischen der entstehenden Wärme und der abgeführten Wärme auf. Erst bei Erreichen höherer Katalysatortemperaturen beschleunigt sich der Abbau des Wasserstoffs und führt die von der Temperaturerhöhung herrührende Konvektion zu einer Durchmischung der umgebenden Atmosphäre.

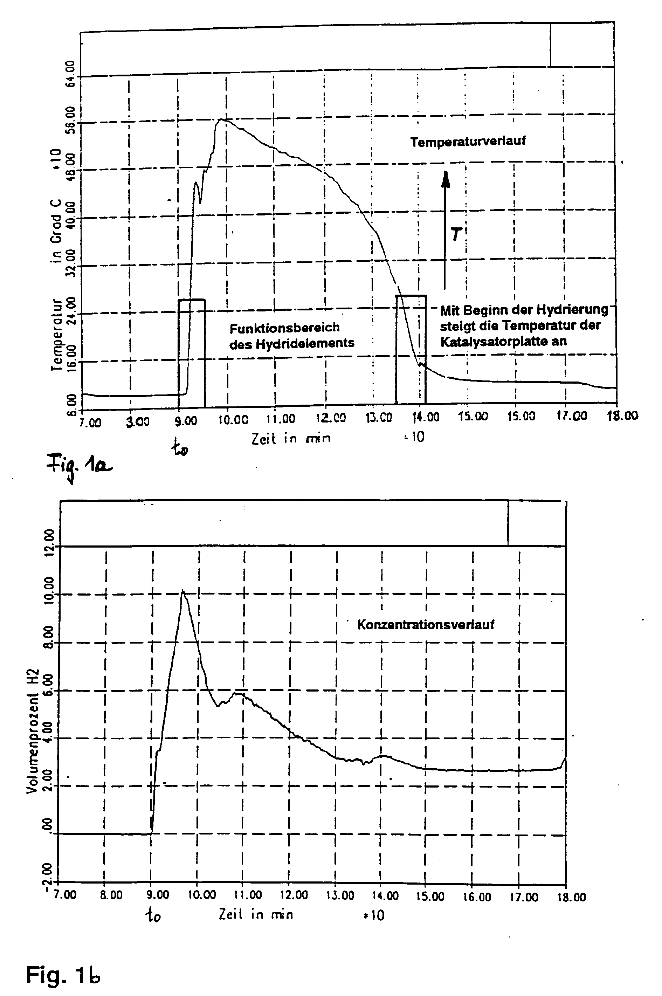

Die Fig. 1a und 1b zeigen den Temperatur- bzw. den Wasserstoffkonzentrationsverlauf in einer Reaktionskammer, die solch einen Katalysator enthält. Dabei handelt es sich um Meßergebnisse, die unter folgenden Bedingungen erzielt wurden. Der Katalysator bestand aus einem Trägerblech aus austenitischem Stahl mit einer Fläche von 0,8 m², das beidseitig mit einer Pd-Legierung mit 95 Gew.-% Pd, 4 Gew.-% Ni und 1 Gew.-% Cu beschichtet war. Die kugelförmige Reaktionskammer mit einem Volumen von 10 m³ wurde zunächst in einer Dampfatmosphäre aufgeheizt. Nach Erreichen einer Temperatur von 100°C wurden der Dampf aus der Reaktionskammer abgepumpt und anschließend nacheinander 50 Vol.-% Dampf, 40 Vol.-% Luft und 10 Vol.-% Wasserstoff eingeleitet.

Wie der Temperaturverlauf in dem Diagramm in Fig. 1a zeigt, setzte die katalytische Oxidation mit geringer Verzögerung nach Einleitung des Wasserstoffs zum Zeitpunkt $t_0$ ein und führte innerhalb von etwa 7 Minuten zu einem Temperaturanstieg des Katalysators von 80°C auf 560°C. Nach Erreichen dieser maximalen Temperatur von 560°C und der Wasserstoffkonzentrationszunahme bis auf 10 Vol.-% (siehe Fig. 1b) setzte die Abnahme sowohl der Temperatur als auch der Konzentration infolge der bei der höheren Temperatur beschleunigten katalytischen Oxidation des Wasserstoffs ein. Die Diagramme zeigen andererseits, daß nach Erreichen einer Temperatur von etwa 160°C und einer Wasserstoffkonzentration von etwa 2,8 Vol.-% keine weitere merkliche Abnahme des Wasserstoffgehalts in dem Gasgemisch stattfand .

Im Stand der Technik sind sogenannte Wasserstoffspeichermaterialien bekannt, etwa Metalle, Metallegierungen oder intermetallische Verbindungen, die durch Hydridbildung in einem resersiblen Vorgang Wasserstoff aufnehmen (und wieder abgeben) können (vgl. etwa G. Sandrock: Metal Hydride Technology Fundaments and Applications, Energieträger Wasserstoff, Jahreskolloquium 1991 der Universität Stuttgart, VDI-Verlag Düsseldorf, 1991, Seiten 143-170). Die Anwendung derartiger Materialien erstreckt sich bislang vornehmlich auf den Einsatz zur Speicherung von Wasserstoff als Energieträger. Aus der JP-A-63-072851 ist eine Zirkonlegierung mit Titan, Niob, Molybdän, Eisen und Vanadium als Wasserstoff absorbierende Legierung bekannt. Sie wird als Wärmespeicher oder Temperatursensor sowie zur Speicherung zum Tränsport, zur Trennung und zur Reinigung von Wasserstoff eingesetzt.

Aufgabe der vorliegenden Erfindung ist es, eine Vorrichtung der eingangs angegebenen Art so auszugestalten, daß eine weitergehende Beseitigung des freien Wasserstoffs, insbesondere auch bei niedrigeren Temperaturen erreicht wird, als dies bislang möglich war.

Diese Aufgabe wird erfindungsgemäß durch die kennzeichnenden Merkmale des Patentanspruchs 1 gelöst.

Vorteilhafte Weiterbildungen der Erfindung sind in den Unteransprüchen gekennzeichnet.

Die Erfindung beruht auf der Erkenntnis und Ausnutzung der Tatsache, daß sich die Bindung von Wasserstoff durch Hydridbildung abhängig von der Temperatur und dem Wasserstoffpartialdruck im wesentlichen gerade umgekehrt verhält, wie diejenige durch die katalytische Rekombination.

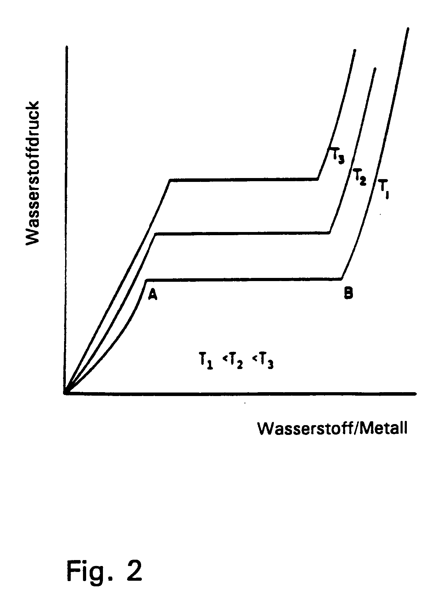

Der Vorgang der Hydrierung läßt sich anhand des in Fig. 2 gezeigten idealisierten Diagramms beschreiben, das mit der Temperatur als Parameter den Wasserstoffdruck bzw. Wasserstoffpartialdruck über dem Verhältnis von Wasserstoff zu Metall eines Wasserstoffspeichermetalls darstellt. Mit zunehmendem Druck wird eine geringe Menge des Wasserstoffs unter Bildung einer festen Lösung von dem Metall absorbiert. Vom Punkt A bis Punkt B werden unter gleichbleibendem Druck, dem sogenannten Plateaudruck, erhebliche Mengen von Wasserstoff unter fortschreitender Hydridbildung absorbiert. Dieses Plateau entspricht einer Zweiphasenmischung einer Wasserstoff gesättigten Metallphase und dem Hydrid. Am Punkt B ist das Metall vollständig zu dem Hydrid umgewandelt worden, und ein weiterer Anstieg des Wasserstoffdrucks führt zu einer geringen zusätzlichen Absorbtion von Wasserstoff in Lösung in der Hydridphase.

Wie aus Fig. 2 erkennbar, wird das Plateau bei zunehmender Temperatur schmäler und zu höheren Drücken verschoben. Das heißt, bei niedrigen Temperaturen nimmt das Wasserstoffspeichermetall bei geringerem Druck größere Mengen an Wasserstoff auf.

Betrachtet man nun die atmosphärischen Bedingungen und die Temperaturen im Sicherheitsbehälter eines Kernkraftwerkes bei einer Unfallsituation, dann zeigt sich, daß der gemeinsame Einsatz von Katalysatoren und mit geeignet ausgewählten Wasserstoffspeichermaterialien zu einer idealen gegenseitigen Ergänzung führt:

1) Geht man davon aus, daß die Oberfläche des oder der Katalysatoren wesentlich größer als diejenige des Wasserstoffspeichermaterials ist, dann wird der überwiegende Teil der in der umgebenden Atmosphäre enthaltenen $H_2$-Moleküle mit der Katalysatoroberfläche in Berührung kommen.

2) Bei anfänglich großer Zuströmung und damit großer Verfügbarkeit von $H_2$-Molekülen wird der hohe Wasserstoffpartialdruck eine schnelle katalytische Umwandlung und damit verbunden einen schnellen Temperaturanstieg des Katalysators bewirken, wie dies praktisch aus Fig. 1a hervorgeht.

3) Mit zunehmender Temperatur der Katalysatorfläche erhöht sich deren katalytische Wirkung, so daß ein größerer Anteil der auftreffenden $H_2$-Moleküle die für die katalytische Reaktion erforderliche Aktivierungsenergie erhält.

4) Der Temperaturanstieg der Katalysatoroberfläche aufgrund der exothermen Reaktion setzt sich bis zum Erreichen eines Gleichgewichtszustand zwischen der erzeugten Wärme und der durch Wärmestrahlung und Konvektion an die Umgebung abgeführten Wärme fort. Die katalytische Reaktion bei höheren Temperaturen stellt eine der leistungsfähigsten Methoden der $H_2$-Beseitigung dar. Deshalb wird der überwiegende Teil des Wasserstoffs beseitigt, wenn die $H_2$-Konzentration des Gasgemisches verhältnismäßig hoch ist.

5) Nachdem der Hauptanteil des Wasserstoffs beseitigt wurde, führt der damit verbundene Abfall des Wasserstoffpartialdrucks zu einer Verringerung der katalytischen Reaktion und damit auch zu einer abnehmenden Wärmeproduktion und schließlich einer Temperaturabnahme des Katalysators.

6) Die abnehmende Temperatur des Katalysators verringert ihrerseits dessen katalytische Wirkung, so daß ein geringerer Anteil des mit der Katalysatoroberfläche in Berührung kommenden Wasserstoffs tatsächlich oxidiert wird, was in einer Art Kettenreaktion wiederum den Temperaturabfall beschleunigt.

7) Während bei den zunächst herrschenden hohen Wasserstoffpartialdrücken und Temperaturen die Hydrierung des Wasserstoffspeichermaterials im Verhältnis zu katalytischen Reaktion keinen nennenswerten Beitrag zur Wasserstoffbeseitigung leistet, wie zuvor beschrieben, kann ihr Beitrag bei geeigneter Auswahl des Wasserstoffspeichermaterial gerade dann einsetzen, wenn die katalytische Reaktion deutlich abzunehmen beginnt. Da auch die Hydridbildung einen exothermen Vorgang darstellt und erfindungsgemäß die Wasserstoffspeichereinrichtung mit der Katalysatoranordnung in Wärmeaustauschverbindung steht, wird die oben beschriebene Kettenreaktion infolge der Wärmezufuhr von der Wasserstoffspeichereinrichtung an die Katalysatoranordnung verlangsamt. Die Hydridbildung beseitigt also nicht nur ihrerseits Wasserstoff, sondern bewirkt auch, daß die Katalysatoroberfläche länger auf einer höheren, mit größerer katalytischer Wirkung verbundenen Temperatur bleibt, als dies ohne Wärmezufuhr von der Wasserstoffspeichereinrichtung her der Fall wäre.

Umfangreiche Untersuchungen mit den Mischkristallen der Nb-V-Legierungen (siehe A.J. Maeland, G.G. Libowitz, F.J. Lynch und G. Rak: Journal of the Less-Common-Metals, 104 (1984) Seiten 133-139) zeigten, daß einige dieser Legierungen bei niedrigem Wasserstoffpartialdruck und bei Raumtemperatur extrem schnell mit dem Wasserstoff reagieren, ohne irgendeine Aktivierungsbehandlung zu erfordern. Die gemessenen Reaktionszeiten waren einige Potenzen höher als diejenigen des Niobs allein bei höheren Temperaturen. Aus Untersuchungen mit Mischkristallen sowohl von Niob als auch von Tantal läßt sich schließen, daß die Reaktion sehr rasch verläuft, wenn die jeweils zugesetzten Metalle einen Atomradius von etwa 5% weniger als Niob bzw. Tantal besitzen. Manche Mischkristalle weisen größere Ansprechzeiten bis zu dem Beginn der Hydridbildung auf. Die Tabelle 1 gibt die Zusammensetzung verschiedener Legierungen, die Zeit bis zum Ende der Hydrierung sowie das endgültige Verhältnis von Wasserstoff zu Metall wieder. Dieses Verhältnis liegt in vielen Fällen über 0,8, was zeigt, daß diese Einlagerungsmischkristalle eine enorme Bindungsfähigkeit für Wasserstoff besitzen. 100 g des Mischkristalls vermögen also etwa 8,7 g Wasserstoff zu binden, was umgerechnet bei Raumtemperatur und normalem Druck etwa 97,2 l Wasserstoff entspricht.

Auch wurden während der Hydridbildung sehr hohe Wärmefreisetzungen gemessen, wobei Abplatzungen, eine Vergrößerung des Ausgangsvolumens sowie eine Pulverisierung stattfanden.

Bei der erfindungsgemäß vorgeschlagenen Vorrichtung werden die Wasserstoffspeichermaterialien so ausgewählt, daß in einer Anfangsphase unmittelbar nach einer Wasserstofffreisetzung in erster Linie die katalytische Reaktion für die Entfernung des Wasserstoffs durch Oxidation verantwortlich ist. Dies gewährleistet eine schnelle Umwandlung eines großen Teils des Wasserstoffs zu Wasser. Die gewählten Wasserstoffspeichermaterialien zeigen bei der dabei entstehenden und durch die vorgesehene Wärmeaustauschverbindung auf das Wasserstoffspeichermaterial übertragene Temperatur nur eine geringe Reaktion, üben also in dieser Phase keinen nennenswerten Einfluß aus. Der Temperaturanstieg erfolgt in dieser Anfangsphase so schnell, daß der Bereich niedrigerer Temperaturen innerhalb einer Zeit durchlaufen wird, die je nach ausgewähltem Wasserstoffspeichermaterial unter Umständen kürzer als dessen Ansprechzeit ist. Wenn dann die katalytische Reaktion nachläßt und sowohl die Temperatur als auch der Wasserstoffpartialdurck fallen, dann setzt die Hydrierung des Wasserstoffspeichermaterials ein, deren Reaktionswärme zumindest einer weiteren Abnahme der katalytischen Wirkung entgegenwirkt, wenn nicht diese vorübergehend sogar wieder erhöht. In Fig. 1a sind die Temperaturbereiche eingezeichnet, innerhalb derer für eine Legierung aus 80 Gew.-% Nb und 20 Gew.-% V, die als Speichermaterial für die Zwecke der vorliegenden Erfindung geeignet ist, die Hydrierung auftritt. Durch Wahl anderer Legierungen oder Metalle kann dieser Bereich hinsichtlich der Temperatur nach oben oder unten verschoben werden. Oberhalb dieser Temperatur findet nur eine geringfügige oder keine Hydrierung statt, da bei erhöhter Temperatur die Dissoziation des Wasserstoffs aus der Legierung überwiegt. Für den Anwendungsfall der erfindungsgemäßen Vorrichtung bei einem Kernkraftwerk mit den dort im Störungsfall zu erwartenden Bedingungen der Temperatur und der Zusammensetzung der Atmosphäre bzw. ihres zeitlichen Verlaufs im Sicherheitsbehälter besonders geeignete Wasserstoffspeichermaterialien sind neben verschiedenen Niob-Legierungen z.B. $CaNi_5$, $LaNi_5$ und $LaNi_{4,7}$. Von diesen nimmt insbesondere das letztere 100% seines Gewichts an Wasserstoff auf. Die Reaktionstemperatur und der Wasserstoffpartialdruck liegen bei diesen Materialien bei ca. 85°C bzw. 0-2 MPa.

Die einfachste Möglichkeit, die bei der Hydridbildung entstehende Wärme an die Katalysatoranordnung zu übertragen, besteht darin, daß man die Wasserstoffspeichereinrichtung mechanisch gut wärmeleitend mit der Katalysatoranordnung verbindet.

Das Wasserstoffspeichermaterial der Wasserstoffspeichereinrichtung kann in Form einer oder mehrerer Platten, als Späne, als Granulat oder auch in Schwammform eingesetzt werden. Je größer die Oberfläche, desto schneller ist die Reaktion. Über die Wahl der Form, in der das Material eingesetzt wird, und damit die Größe der Oberfläche kann daher zur Anpassung an einen jeweiligen Einsatzzweck auf die Reaktionsgeschwindigkeit Einfluß genommen werden.

Eine vorteilhafte Möglichkeit der Befestigung insbesondere von losem Wasserstoffspeichermaterial, z.B. Späne, an einer mit Katalysatormaterial beschichteten Trägerplatte, besteht darin, daß man auf Teilen der Trägerplatte eine oder mehrere Kappen oder Behälter aus einem gitterartigen Material und damit gasdurchlässig auf die Trägerplatte aufsetzt und das Wasserstoffspeichermaterial in den zwischen einer solchen Kappe und der Trägerplatte gebildeten Raum bzw. in einen solchen Behälter einfüllt. Ein Behälter kann an der Trägerplatte in einer solchen Weise befestigt werden, daß einerseits eine gut wärmeleitende Verbindung besteht, andererseits zwischen dem größten Teil des Bodens des Behälters und der beschichteten Oberfläche der Trägerplatte ein Zwischenraum verbleibt, der auch in diesem Bereich einen direkten Zutritt des umgebenden Gasgemisches an die Katalysatoroberfläche erlaubt.

Es sind Katalysatoranordnungen bekannt, bei denen das Katalysatormaterial zur Erzielung einer sehr großen Katalysatoroberfläche in granulatartiger Form innerhalb eines Behälters aus netzartigem Material angeordnet ist. In einem solchen Fall könnten das Katalysatormaterial und das ebenfalls in granulatartiger Form vorgesehene Wasserstoffspeichermaterial vermischt in einem solchen Behälter angeordnet werden.

Es ist auch bekannt, daß verschiedene Wasserstoffspeichermaterialien unterschiedlich lange Ansprechzeiten aufweisen, bis der Vorgang der Hydrierung einsetzt, nachdem das Material dem Wasserstoff ausgesetzt wurde. Eine vorteilhafte Weiterbildung der Erfindung macht sich diese Tatsache dadurch zunutze, daß innerhalb einer Wasserstoffspeichereinrichtung oder verschiedener Wasserstoffspeichereinrichtungen Wasserstoffspeichermaterialien mit unterschiedlichen Ansprechzeiten eingesetzt werden. Damit kann bespielsweise Fällen Rechnung getragen werden, in denen mit zeitlich versetzten Schüben einer Wasserstofffreisetzung ge-

rechnet werden muß.

Ausführungsbeispiele der Erfindung werden nachfolgend anhand der Zeichnungen näher erläutert. Es zeigen:

Fig. 1a    ein Diagramm des Temperaturverlaufs über der Zeit für eine katalytisch unterstützte Oxidation von Wasserstoff, wobei Funktionsbereiche einer Waserstoffspeichereinrichtung eingezeichnet sind,

Fig. 1b    den Wasserstoffkonzentrationsverlauf über der Zeit bei einer katalytisch unterstützten Oxidation von Wasserstoff,

Fig. 2    ein Diagramm zur Erläuterung der Wasserstoffspeicherung durch Bildung eines Metallhydrids, wobei für drei verschiedene Temperaturen als Parameter der Wasserstoffdruck über dem Verhältnis von Wasserstoff zu Metall aufgetragen ist,

Fig. 3    schematisch ein Ausführungsbeispiel einer Vorrichtung gemäß der Erfindung, wobei Fig. 3a die Ansicht von oben und Fig. 3b die Ansicht von vorn darstellen,

Fig. 4    eine Teilschnittansicht eines anderen Ausführungsbeispiels der Erfindung, in der nur eines der Wasserstoffspeicherelemente und der entsprechende Bereich der Katalysatoranordnung gezeigt sind, und

Fig. 5    eine vergößerte Teilschnittansicht noch eines anderen Ausführungsbeispiels der Erfindung.

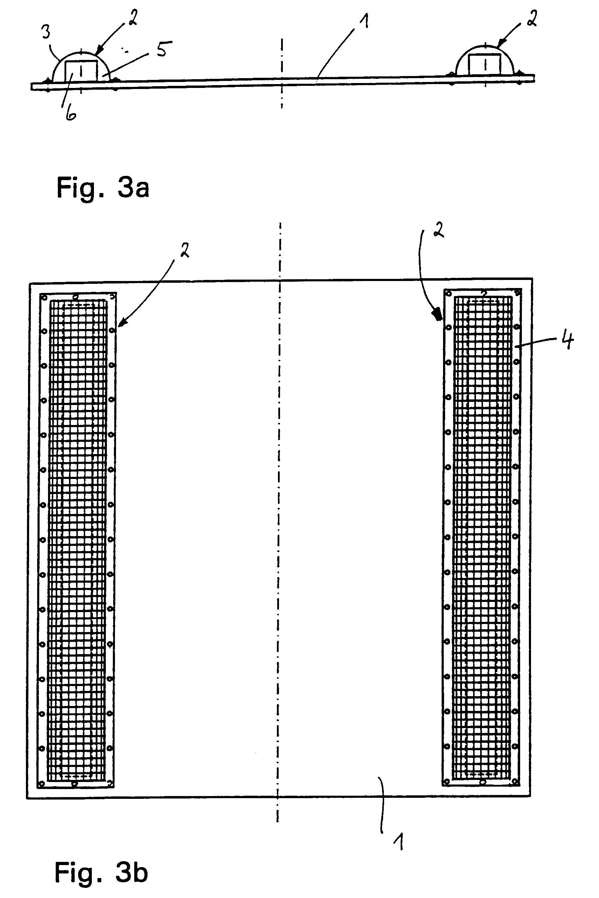

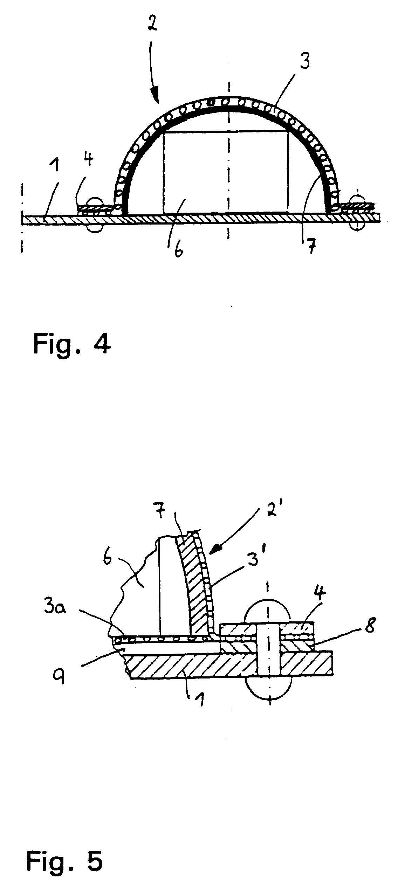

Bei dem in Fig. 3 dargestellten Ausführungsbeispiel setzt sich die Vorrichtung aus einer Katalysatorplatte 1 und zwei an deren beiden Längsseiten befestigten Wasserstoffspeicherelementen 2 zusammen. Die Katalysatorplatte 1 besteht, ohne daß dies im einzelnen dargestellt wäre, aus einer Trägerplatte aus rostfreiem Material, die beidseitig mit einem Katalysatormaterial beschichtet ist, wie es aus den eingangs genannten Druckschriften an sich bekannt ist. Die Wasserstoffspeicherelemente 2 weisen jeweils eine, nur beispielhaft im Schnitt halbkreisförmig dargestellte, Kappe 3 auf. Die Kappe 3 besitzt einen Umfangsflansch 4, mit dem sie mit der Katalysatorplatte 1 verschraubt, vernietet oder auf andere geeignete Weise gut wärmeleitend befestigt ist. Innerhalb des Umfangsflansches 4 ist die aus rostfreiem Stahl oder Kupfer hergestellte Kappe 3 netz- oder gitterartig. (Die Kappe kann, wie etwa in Fig. 4 gezeigt, auch einen abgebogenen Rand aus dem gitterartigen Material aufweisen, auf den ein Umfangsflansch oder auch nur Beilagscheiben für die Schrauben, Nieten oder dergleichen aufgelegt sind). Innerhalb der Kappe befindet sich das eigentliche Wasserstoffspeichermaterial 6, das in den Figuren nur schematisch als Block angedeutet ist. Die Maschenweite der Kappe 3 ist so gewählt, daß der freie Gaszutritt in den zwischen der Kappe 3 und der Katalysatorplatte 1 gebildeten Raum 5 gewährleistet ist, aber gleichwohl loses Wasserstoffspeichermaterial 6 zurückgehalten wird.

Die Hydridbildung findet unter starker Volumenausdehnung statt. Am Ende der Hydridbildung kommt es zu einem Zerbröckeln oder gar einer Pulverisierung des Wasserstoffsspeichermaterials. Der zwischen der Kappe 3 und der Katalysatorplatte 1 gebildete Raum 5 sollte daher ein um 30 bis 40% höheres Volumen als das Ausgangsvolumen des Wasserstoffspeichermaterials aufweisen.

Fig. 4 zeigt eine Teilschnittansicht eines anderen Ausführungsbeispiels der Erfindung, die sich von dem vorgenannten dadurch unterscheidet, daß an der Innenwand der Kappe 3 ein Filter 7 vorgesehen ist, der das wasserstoffspeichermaterial 6 sowohl im Bereitschaftszustand als auch im Betriebszustand vor der Ablagerung von Aerosolen schützen soll, die in der umgebenden Atmosphäre enthalten sein können und die Wirksamkeit des Wasserstoffspeichermaterials beeinträchtigen könnten. Hierfür kommen insbesondere sogenannte HEPA (High Efficieny Particulate Air) Filter in Betracht, die sich durch einen großen Abscheidegrad für Aerosole und andererseits eine große Durchlässigkeit für Wasserstoff und Sauerstoffgase auszeichnen. Diese Filter bestehen aus Glaswolle mit einem Bindemittel und sind sehr temperaturbeständig (bis ca. 700°C). Eine Schicht eines solchen Filters wird an der Innenwand der Kappe 3 befestigt.

Es ist bekannt, daß verschiedene Wasserstoffspeichermaterialien unterschiedliche Ansprechzeiten bis zum Beginn der Hydridbildung aufweisen, die teilweise recht lang sind. Beispielsweise beträgt die Ansprechzeit von Nb-Zr sowie Nb-Ti und Nb-Ta um 24h.

Der zeitliche Verlauf der Freisetzung von Wasserstoff aus dem Primärkreislauf in den Sicherheitsbehälter eines Kernkraftwerks hängt vom Unfallablauf ab. Auf Grund von Rechnersimulationen weiß man, daß der Energie- und Masseneintrag in den Sicherheitsbehälter die räumliche Verteilung der Gase beeinflußt und daß in den ersten Stunden nach Freisetzung des Wasserstoffs in den Sicherheitsbehälter die höchsten Konzentrationen in der unmittelbaren Umgebung des Orts der Freisetzung auftreten. Demgegenüber verläuft die langzeitige Wasserstoffproduktion und dessen Eindringen in den Sicherheitsbehälter langsamer. Einem solchen Verlauf kann durch Einsatz unterschiedlicher Wasserstoffspeichermaterialien mit verschiedenen Ansprechzeiten Rechnung getragen werden. So kann ein Material mit geringer Ansprechzeit vorgesehen werden, dessen Hydridbildung am Ende der anfänglichen großen Zuströmung von Wasserstoff einsetzt. Ein anderes Wasserstoffspeichermaterial mit größerer Ansprechzeit kann später seine Wirkung entfalten und dann trotz vergleichsweise geringer Wasserstoffkonzentration durch Erhöhung der Katalysatortemperatur für eine zeitgestreckte Ausdehnung sowohl der katalytischen Wirkung als auch der Wasserstoffspeicherwirkung sorgen.

Im Fall einer Wahl verschiedener Wasserstoffspeichermaterialien mit unterschiedlichen Ansprechzeiten ist es zweckmäßig, wenigstens den Boden der gitterartigen Kappe mit einer solchen Maschenweite vorzusehen, daß bereits gebildete Hydride, deren Korn- oder Partikelgröße, wie oben ausgeführt, kleiner als die des Wasserstoffspeichermaterials vor der Reaktion ist, durch die Maschen hindurch rausfallen können. Im Fall des Einsatzes eines Filters gemäß der in Fig. 4 dargestellten Ausführungsform, kann für diesen Boden ein Filter gewählt werden, das nach einer gewissen Temperaturerhöhung spröde wird, zerbröckelt und durch den weitmaschigen Boden der Kappe 3 herausfällt. Dies gibt den Weg frei für die kleinen Teilchen oder das Pulver, die bei der bereits erfolgten Hydridbildung gebildet wurden, durch Schwerkraft aus der Kappe 3 heraus nach unten zu fallen. Dadurch kann verhindert werden, daß bei diesem bereits umgewandelten Material bei erneuter Temperaturerhöhung der Katalysatorplatte eine Dehydrierung einsetzt.

Bei einer Unfallsituation werden zusammen mit dem Waserstoff große Mengen an Dampf freigesetzt. Manche als Legierungsbestandteile zusammen mit Niob an sich als Wasserstoffspeichermaterial geeignete Metalle wie zum Beispiel Molybden und Palladium besitzen eine große Affinität, mit dem Dampf unter Oxidbildung bei den auftretenden Temperaturen zu reagieren. Für das Wasserstoffspeichermaterial mit kurzer Ansprechzeit stellt eine derartige Reaktion mit dem Dampf kein größeres Problem dar. Dagegen könnte bei Materialien mit längeren Ansprechzeiten, die entsprechend länger dem Dampf ausgesetzt sind, Probleme auftreten. Es ist daher vorteilhaft, für solche Materialien als die mit Niob zu legierenden Metalle solche zu wählen, die geringe Reaktion mit Dampf bei einer Temperatur von etwa 300°C aufweisen. Beispielsweise erfüllen Zirkonium und Titan dieser Forderung und zeichnen sich in Legierung mit Niob zugleich durch längere Ansprechzeiten aus.

Die für eine praktische Vorrichtung erforderliche Oberfläche der Katalysatoranordnung hängt von dem Volumen des zu sichernden Raums ab. Die Katalysatoranordnung, wie natürlich auch die Waserstoffspeichereinrichtung, stellen in der Regel lediglich eine Sicherheitseinrichtung dar, die nur im Störungsfall ihre Wirkung entfalten soll. Sie muß also unter Umständen über viele Jahre, im günstigsten Fall immer, in einem Bereitschaftzustand gehalten werden. Aus Platzgründen im Sicherheitsbehälter einerseits und zum Schutz der Katalysatoranordnung andererseits ist es bekannt, diese im Bereitschaftszustand in einem mit einem inerten Gas gefüllten gasdichten Behälter zu halten, aus dem sie erst bei Auftreten eines Störungsfalls entlassen wird. Dies verhindert eine Beeinträchtigung der katalytischen Wirkung, die auftreten könnte, wenn die Katalysatoranordnung über lange Zeit einer Katalysatorgifte enthaltenden Atmosphäre ausgesetzt wäre, selbst wenn diese Gifte nur in geringer Konzentration vorliegen. Es ist ferner bekannt, die Katalysatoranordnung in mehrere einzelne Elemente, zum Beispiel Platten, aufzuteilen und diese im Bereitschaftszustand als Stapel innerhalb eines solchen gasdichten Behälters aufzubewahren. Damit das Volumen eines solchen Behälters bei Anwendung der erfindungsgemäßen Lehre nicht unnötig vergrößert wird, ist es vorteilhaft, die Wasserstoffspeicherelemente von im Bereitschaftszustand im Stapel aufeinander liegenden Katalysatorplatten versetzt zueinander anzuordnen, so daß der Abstand der beiden benachbarten Katalysatorplatten in diesem Stapel nicht größer ist als die Erstreckungshöhe eines Wasserstoffspeicherelements über seiner Katalysatorplatte.

Durch den direkten Kontakt zwischen dem Wasserstoffspeichermaterial und der Katalysatorplatte bei dem dargestellten Ausführungsbeispiel ist eine gute Wärmeübertragung der bei der Hydridbildung entstehenden Wärme an die Katalysatorplatte gewährleistet. Dafür ist allerdings die Oberfläche der Katalysatorplatte, die der umgebenden Atmosphäre direkt ausgesetzt ist, entsprechend verkleinert. Wenn das Wasserstoffspeichermaterial in körniger Form, also zum Beispiel als Granulat oder Späne, vorliegt, dann ist es zwar gasdurchlässig, so daß die von den Wasserstoffspeicherelementen bedeckte Fläche der Katalysatorplatte nicht ganz für die katalytische Wirkung verlorengeht, jedoch ist die katalytische Wirkung dieser Flächenanteile aufgrund der behinderten Gaszufuhr eingeschränkt.

Dem läßt sich dadurch abhelfen, daß man gemäß dem in Fig. 5 dargestellten Ausführungsbeispiel Wasserstoffspeicherelemente 2′ verwendet, die anstelle der Kappe 3 der voranstehend beschriebenen Ausführungsformen ein Gehäuse 3′ aufweisen, das heißt mit einem der Katalysatorplatte 1 benachbarten Boden 3a ausbildet sind und mittels Abstandshaltern so an der Katalysatorplatte 1 befestigt sind, daß der Boden in einem gewissen Abstand über der Katalyatorplatte 1 liegt. Wenn man darüberhinaus den Abstandshalter 8 in Form gesonderter Scheiben im Bereich jeder Vernietung oder Verschraubung des Umfangsflansches vorsieht, dann hat das umgebende Gasgemisch durch die dabei entstehenden Zwischenräume 9 auch unter dem Umfangsflansch direkten Zutritt zu dem unterhalb des Gehäuses liegenden Flächenteil der Katalysatorplatte. Abgesehen von dem vorgenannten Unterschied gelten alle Ausführungen zur vorigen Ausführungsform der Erfindung gleichermaßen für die von Fig. 5. Das Ausführungsbeispiel in Fig. 5 ist mit dem Filter 7 dargestellt, ohne aber auf die Verwendung des Filters beschränkt zu sein.

<u>Tabelle 1</u>: Wasserstoffspeicherlegierungen auf der Basis von Nb

| Legierung | $Nb_{1-x}M_x$ | Zeit bis einer 80%-igen Vollendung der Reaktion | Endgültige Zusammensetzung (Atomverhältnis Wasserstoff zu Metall) |
|---|---|---|---|
| M | x | s | H/M |
| Cr | 0,03 | 140 | 0,84 |
| Cr | 0,05 | 120 | 0,82 |
| Cr | 0,10 | 120 | 0,82 |
| Mn | 0,10 | < 100 | 0,85 |
| Fe | 0,01 | 100 | 0,88 |
| Fe | 0,05 | 240 | 1,87 |
| Fe | 0,10 | 150 | 0,80 |
| Co | 0,01 | 120 | 0,88 |
| Co | 0,03 | 100 | 0,87 |
| Co | 0,05 | 100 | 0,84 |
| Mo | 0,05 | ~ 1 h | 0,86 |
| Mo | 0,10 | 180 | 0,76 |
| Mo | 0,20 | 150 | 0,65 |
| Mo | 0,30 | 26 | 0,45 |
| Ni | 0,01 | 160 | 0,88 |
| Ni | 0,02 | 60 | 0,89 |
| Ni | 0,03 | 60 | 0,86 |
| Ni | 0,05 | 60 | 0,85 |
| Ni | 0,10 | 180 | 0,74 |
| V | 0,10 | < 80 | 0,82 |
| V | 0,50 | < 100 | 0,80 |
| V | 0,60 | 160 | 0,64 |
| V | 0,70 | > 10 h | 0,60 |
| Al | 0,1 | 240 | 0,72 |
| Si | 0,02 | < 100 | 0,85 |
| Ge | 0,02 | < 100 | 0,84 |
| Ga | 0,06 | < 80 | 0,74 |
| Zr | 0,01 | > 24 h | |
| Ti | 0,01 | > 24 h | |
| Ta | 0,01 | > 24 h | |

EP 0 670 575 B1

**Patentansprüche**

1. Vorrichtung zur Entfernung von freiem Wasserstoff aus einem im wesentlichen Wasserstoff, Sauerstoff und Dampf enthaltenden Gasgemisch mit einer Katalysatoranordnung (1) zur katalytisch unterstützten Oxidation des Wasserstoffs, **gekennzeichnet durch** eine in Wärmeaustauschverbindung mit der Katalysatoranordnung (1) angeordnete Wasserstoffspeichereinrichtung (2; 2′) mit einem Wasserstoffspeichermaterial (6), das bei Temperaturen unterhalb einer effektiven Reaktionstemperatur der Katalysatoranordnung (1) Wasserstoff unter Wärmefreigabe durch Hydridbildung bindet.

2. Vorrichtung nach Anspruch 1, **dadurch gekennzeichnet,** daß die Wasserstoffspeichereinrichtung (2) mit der Katalysatoranordnung (1) verbunden ist.

3. Vorrichtung nach Anspruch 2, **dadurch gekennzeichnet,** daß die Katalysatoranordnung (1) als eine mit Katalysatormaterial beschichtete Trägerplatte ausgebildet ist und daß im Bereich eines Teiles der Fläche der Trägerplatte wenigstens eine Kappe (3) aus einem netzartigen Material auf die Trägerplatte aufgesetzt ist und ein zwischen der Trägerplatte und der Kappe gebildeter Raum (5) das Wasserstoffspeichermaterial in Plattenform, in Form eines Granulats oder Schwamms oder in Form von Spänen enhält.

4. Vorrichtung nach Anspruch 2, **dadurch gekennzeichnet,** daß die Katalysatoranordnung (1) als eine mit Katalysatormaterial beschichtete Trägerplatte ausgebildet ist und daß im Bereich eines Teiles der Fläche der Trägerplatte wenigstens ein Behälter (3′) aus einem netzartigen Material mit Abstandshaltern (8) auf die Trägerplatte aufgesetzt ist und in dem Behälter das Wasserstoffspeichermaterial in Plattenform, in Form eines Granulats oder Schwamms oder in Form von Späne enhalten ist.

5. Vorrichtung nach Anspruch 2, **dadurch gekennzeichnet,** daß die Katalysatoranordnung einen Behälter aus einem netzartigen Material umfaßt, der granulatförmiges Katalysatormaterial gemischt mit granulatförmigem Wasserstoffspeichermaterial enthält.

6. Vorrichtung nach einem der Ansprüche 3 bis 5, **dadurch gekennzeichnet**, daß sich an der Innenseite der Kappen- oder Behälterwände eine Filterschicht (7) aus einem HEPA-Filtermaterial befindet.

7. Vorrichtung nach einem der vorhergehenden Ansprüche, **dadurch gekennzeichnet**, daß die Wasserstoffspeichereinrichtung wenigstens zwei Wasserstoffspeichermaterialien umfaßt, die sich in ihrer Ansprechzeit, die vom Erreichen der für die Hydridbildung erforderlichen Temperatur bis zum Beginn der Hydridbildung vergeht, unterscheiden.

8. Vorrichtung nach Anspruch 7 in Verbindung mit einem der vorhergehenden Ansprüche 3 bis 6, **dadurch gekennzeichnet,** daß das Wasserstoffspeichermaterial mit der geringeren Ansprechzeit ein solches ist, das durch die Hydrierung zu einer relativ feinkörnigen Substanz zerfällt, und daß der in Gebrauchslage der Vorrichtung den Boden der Kappe bzw. des Behälters darstellende Teil eine Maschenweite aufweist, die größer ist als die Korngröße des Hydrids.

9. Vorrichtung nach einem der vorhergehenden Ansprüche, **dadurch gekennzeichnet** daß das Wasserstoffspeichermaterial eine Nioblegierung ist.

10. Vorrichtung nach den Ansprüch 7 und 9, dadurch gekennzeichnet, daß das Wasserstoffspeichermaterial eine Legierung des Niobs mit Zirkonium oder Titan ist.

**Claims**

1. Device for removing free hydrogen from a gas mixture containing essentially hydrogen, oxygen, and steam, with a catalyst arrangement (1) for catalytically supporting oxidation of the hydrogen, characterized by a hydrogen-storage means (2; 2′) positioned to be in heat-exchanging communication with the catalyst arrangement (1) and having a hydrogen-storage material (6), which at temperatures below an effective reaction temperature of the catalyst arrangement (1) binds hydrogen by hydride formation, with the liberation of heat.

8

2. Device according to claim 1, characterized in that the hydrogen-storage means (2) is coupled to the catalyst arrangement (1).

3. Device according to claim 2, characterized in that the catalyst arrangement (1) is constructed as a carrier plate coated with catalyst material, and that within the region of a portion of the surface of the carrier plate at least one cap (3) made of a netlike material is mounted on the carrier plate and a space (5) created between the carrier plate and the cap contains the hydrogen-storage material in plate form, in the form of granules or a sponge, or in the form of chips.

4. Device according to claim 2, characterized in that the catalyst arrangement (1) is constructed as a carrier plate coated with catalyst material, and that within the region of a portion of the surface of the carrier plate at least one container (3′) made of a netlike material is mounted with spacers (8) on the carrier plate and the hydrogen-storage material is contained within this container in plate form, in the form of granules or a sponge, or in the form of chips.

5. Device according to claim 2, characterized in that the catalyst arrangement includes a container made of a netlike material, which contains granule-shaped catalyst material mixed with granule-shaped hydrogen-storage material.

6. Device according to one of the claims 3 to 5, characterized in that located on the inner side of the cap walls or container walls is a filter layer (7) made of an HEPA filter material.

7. Device according to one of the preceding claims, characterized in that the hydrogen-storage means includes at least two hydrogen-storage materials, which differ in their response time, which is the time that elapses from the reaching of the temperature needed for hydride formation to the beginning of hydride formation.

8. Device according to claim 7 in conjunction with one of the preceding claims 3 to 6, characterized in that the hydrogen-storage material with the shorter response time is one that disintegrates into a relatively fine-grained substance due to the hydriding, and that the portion constituting the bottom of the cap or of the container when the device is in a position of use has a mesh size that is larger than the grain size of the hydride.

9. Device according to one of the preceding claims, characterized in that the hydrogen-storage material is a niobium alloy.

10. Device according to claim 7 and 9, characterized in that the hydrogen-storage material is an alloy of niobium with zirconium or titanium.

**Revendications**

1. Dispositif d'élimination d'hydrogène libre dans un mélange gazeux contenant essentiellement de l'hydrogène, de l'oxygène et de la vapeur, avec un système de catalyseur (1) pour l'oxydation catalytique de l'hydrogène, caractérisé en ce qu'il comporte un dispositif (2 ; 2′) d'accumulation d'hydrogène, disposé en relation d'échange thermique avec le système de catalyseur (1), comportant un matériau (6) d'accumulation d'hydrogène qui, à des températures inférieures à une température efficace de réaction du système de catalyseur (1), fixe l'hydrogène en libérant de la chaleur avec formation d'un hydrure.

2. Dispositif selon la revendication 1, caractérisé en ce que le dispositif (2) d'accumulation d'hydrogène est relié au système de catalyseur (1).

3. Dispositif selon la revendication 2, caractérisé en ce que le système de catalyseur (1) a la forme d'une plaque de support revêtue d'un matériau catalyseur, et que dans une région d'une partie de la surface de la plaque de support, au moins une coiffe (3) formée d'un matériau réticulé est posée sur la plaque de support, et un espace (5) formé entre la plaque de support et la coiffe contient le matériau d'accumulation d'hydrogène sous la forme de plaques, de granules ou d'une éponge, ou sous la forme de copeaux.

4. Dispositif selon la revendication 2, caractérisé en ce que le système de catalyseur (1) a la forme d'une plaque de support revêtue d'un matériau catalyseur, et que dans une région d'une partie de la surface de la plaque de support, au moins un réservoir (3') formé d'un matériau réticulé avec des écarteurs (8) est posé sur la plaque de support, et ledit réservoir contient le matériau d'accumulation d'hydrogène sous la forme de plaques, de granules ou d'une éponge, ou sous la forme de copeaux.

5. Dispositif selon la revendication 2, caractérisé en ce que le système de catalyseur comprend un réservoir formé d'un matériau réticulé, qui contient le matériau catalyseur en forme de granules et est mélangé avec le matériau d'accumulation d'hydrogène sous forme de granules.

6. Dispositif selon l'une des revendications 3 à 5, caractérisé en ce qu'une couche filtrante (7) formée d'un matériau filtrant de HEPA est située sur la face intérieure des parois de la coiffe ou du réservoir.

7. Dispositif selon l'une des revendications précédentes, caractérisé en ce que le dispositif d'accumulation d'hydrogène comprend au moins deux matériaux d'accumulation d'hydrogène qui se différencient par leur temps de réponse entre le moment où la température nécessaire à la formation de l'hydrure est atteinte et le moment où la formation de l'hydrure commence.

8. Dispositif selon la revendication 7 en relation avec l'une des revendications 3 à 6 précédentes, caractérisé en ce que le matériau d'accumulation d'hydrogène ayant le temps de réponse le plus court est un matériau qui, sous l'effet de l'hydrogénation, est décomposé en une substance à grains relativement fins, et que l'élément représentant le fond de la coiffe ou du réservoir pendant le fonctionnement du dispositif présente des mailles dont l'ouverture est plus grande que la dimension des grains de l'hydrure.

9. Dispositif selon l'une des revendications précédentes, caractérisé en ce que le matériau d'accumulation d'hydrogène est un alliage à base de niobium.

10. Dispositif selon les revendications 7 et 9, caractérisé en ce que le matériau d'accumulation d'hydrogène est un alliage du niobium avec le zirconium ou le titane.

**Temperaturverlauf**

$T$

**Mit Beginn der Hydrierung steigt die Temperatur der Katalysatorplatte an**

**Funktionsbereich des Hydridelements**

Zeit in min

Fig. 1a

**Konzentrationsverlauf**

Zeit in min

Fig. 1b

Fig. 2

Fig. 3a

Fig. 3b

Fig. 4

Fig. 5